(19) Europäisches Patentamt
European Patent Office
Office européen des brevets

(11) **EP 4 697 608 A1**

(12) **EUROPEAN PATENT APPLICATION**

(43) Date of publication:
**18.02.2026 Bulletin 2026/08**

(21) Application number: **24194944.5**

(22) Date of filing: **16.08.2024**

(51) International Patent Classification (IPC):
**H04B 1/30** *(2006.01)* **H04L 27/36** *(2006.01)*

(52) Cooperative Patent Classification (CPC):
**H04B 1/30; H04L 27/066; H04L 27/1525;
H04L 27/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.
5656 AG Eindhoven (NL)**

(72) Inventors:
• **Carbajal Ipenza, Sammy Johnatan
5656 AG Eindhoven (NL)**
• **Steiner, Johann
5656 AG Eindhoven (NL)**

(74) Representative: **Krott, Michel
NXP B.V.
Intellectual Property & Licensing
High Tech Campus 60
5656 AG Eindhoven (NL)**

Remarks:
Amended claims in accordance with Rule 137(2)
EPC.

(54) **DIGITAL CALIBRATION DEVICE FOR RF SYSTEM**

(57) Described is a digital calibration device (210) for an RF-system (200), the digital calibration device (210) comprising a first input (211) configured to receive I-channel data and a second input (212) configured to receive Q-channel data; a first filter (230) coupled to the first input (211) and configured to estimate a DC offset of the I-channel data and to subtract the estimated DC offset from the I-channel data to provide filtered I-channel data; a second filter (260) coupled to the second input (212) and configured to estimate a DC offset of the Q-channel data and to subtract the estimated DC offset from the Q-channel data to provide filtered Q-channel data; a combining element (250) configured to receive the filtered I-channel data and the filtered Q-channel data and to provide a specified magnitude value (adc_data_iq) based on the filtered I- and Q-channel data; and a level detector (270) configured to receive the specified magnitude value of the filtered I-channel data and Q-channel data and to provide a filter coefficient (dc_coef) both for the first filter (230) and the second filter (260) depending on the specified magnitude value (adc_data_iq).

Fig. 5

EP 4 697 608 A1

**Description**

TECHNICAL FIELD

The present disclosure relates to a digital calibration device for an RF system. Furthermore, the present disclosure relates to a method of removing DC offset in an RF system.

BACKGROUND

A DC offset in RF communication systems refers to a direct current (DC) component in signals. This can cause issues in RF communication systems because it can interfere with an accurate demodulation and detection of the received signal. Sources of DC offset may be e.g. transmitter imperfections, and/or receiver imperfections and/or environmental factors. Effects of DC Offset may be e.g. reduced signal quality, wherein a DC offset can distort the modulated signal, reducing the signal-to-noise ratio (SNR) and increasing bit error rates (BER). Furthermore, demodulation errors can result in inaccuracies in detecting the amplitude variations which can lead to incorrect data interpretation.

SUMMARY

A first aspect of the present disclosure is directed to a digital calibration device for an RF system, the digital calibration device comprising
a first input configured to receive I-channel data and a second input configured to receive Q-channel data;

> a first filter coupled to the first input and configured to estimate a DC offset of the I-channel data and to subtract the estimated DC offset from the I-channel data to provide filtered I-channel data;
> a second filter coupled to the second input and configured to estimate a DC offset of the Q-channel data and to subtract the estimated DC offset from the Q-channel data to provide filtered Q-channel data;
> a combining element configured to receive the filtered I-channel data and the filtered Q-channel data and to provide a specified magnitude value based on the filtered I- and Q-channel data; and
> a level detector configured to receive the specified magnitude value of the filtered I-channel data and Q-channel data and to provide a filter coefficient both for the first filter and the second filter depending on the specified magnitude value.

"I-channel data" and "Q-channel" data are digital data for an in-phase channel and a quadrature channel, which together represent modulation data for digitally modulated systems. Said data can be displayed in a complex plane, with the I-channel data forming the real part and the Q-channel data forming the imaginary part. In this way, DC offset can be removed from the I-channel data and the Q-channel data resulting in an improved performance of a downstream digital demodulator device (e.g. ASK demodulator). The RF system thus provides improved resolutions, originality, etc. of data. With the dynamic DC offset compensation provided by the calibration device, an impact of timing and jitter on signals for the ASK demodulation may be removed to an extent as large as possible. In this way, optimized ADC data are provided for a downstream demodulator device, resulting in optimized operation characteristics of the RF system operated in different applications.

A further aspect of the present disclosure is directed to a method for dynamically removing DC-offset of modulation data of an RF-system, comprising:

> (i) receiving (directly or indirectly) I-channel data at a first input and Q-channel data at a second input of a digital calibration device;
> (ii) estimating a DC-offset of the received I-channel data and Q-channel data, wherein a proximity of the I-channel-data and Q-channel data to an origin of an IQ-plane is determined;
> (iii) determining a specified magnitude value based on the proximity of the I-channel-data and Q-channel data to the origin of an IQ-plane is determined;
> (iv) determining a filter coefficient for a first filter and a second filter depending on the specified magnitude value;
> (v) removing the DC-offset from the received I-channel data and Q-channel data depending on the filter coefficient; and
> (vi) providing filtered I-channel data and filtered Q-channel data.

In one or more embodiments, at least one of the first filter and the second filter is an Infinite Impulse Response, IIR filter, configured to filter input signals in dependence on the filter coefficient provided by the level detector.
In this way, DC offset can be removed more or less intense. An optimization of the removal of the DC is provided in this way. If this offset is removed too aggressively, disadvantages and consequences with respect to family time may arise, which may be hard to predict.

In one or more embodiments, a cut-off frequency of at least one of the first filter and the second filter is determined by the following equation:

$$fc = -\ln(coef\_min)/(2 \text{ x pi}) \text{ x } fs$$

whereas fs is a sampling frequency [Hz] and fc is the cut-off frequency [Hz].

By controlling a high-pass filter in this way, implicitly DC of said of the signals can be removed without removing an unintentional removal of useful signals.

In one or more embodiments, the combining element is configured to estimate the specified magnitude value based on the following formula:

$$\text{magnitude value (adc\_data\_iq)} = \text{sqrt (filtered I-channel data}^2 + \text{filtered Q-channel data}^2).$$

As a consequence, the filtered data provided by the filters are combined by the combining element, which provides a magnitude value for the sake of further processing by the level detector. The magnitude value represents a specified value that delivers a picture of the filtered data to be further processed by a level detector element. The calculation of said magnitude value can be done with reduced hardware power and effort and, therefore, may save a lot of semiconductor space.

In one or more embodiments, the level detector is configured to deliver the filter coefficient depending on specified thresholds of the specified magnitude value.

Hence, the level detector device can deliver adapted filter coefficients depending on the magnitude value. As a consequence, the operational characteristics of the filters can be effectively controlled by flexibly adjusting the operational characteristics of the digital calibration device.

In one or more embodiments, the provision of the filter coefficient of the level detector is controlled by at least one of a first parameter and a second parameter.

As a result, circumstances can be taken into account that two RF systems (e.g., NFC systems) are usually more or less far away from one another, which results in different levels of signals.

In one or more embodiments, the first parameter specifies a maximum of the magnitude value as a basis for calculating a minimum value of the filter coefficient.

The filter coefficient in this way is based on the specified value of the magnitude value in order provide well-defined and predictable operation characteristics of the filters.

In one or more embodiments, the second parameter specifies a rising level of the magnitude value after having reached a minimum of the magnitude value.

For example, the characteristics of the filters can be adapted in that it provides its maximum filtering effect in the dips of the filtered signal, wherein at maxima of the filtered and combined signal, essentially no filtering takes place.

In one or more embodiments, the first filter, the second filter, the combining element and the level detector (are functionally connected together and) are configured for being operated clocked.

The whole process can therefore be executed in steps and represents the weekly will predictable and scalable process of removing DC offset of ADC output signals. In effect, the filters the IQ-combiner and the level detector are digital clocked elements and are operated clocked. Dynamic process that n needs n times to execute. Only present during the system usage itself. The digital calibration device thus realizes a cycle of determination and output of filtered I-data and filtered Q-data.

BRIEF DESCRIPTION OF DRAWINGS

The above discussion/summary does not describe each embodiment or every implementation of the present disclosure. The drawings and detailed descriptions that follow also exemplify various embodiments. The aspects defined above and further aspects of the present disclosure are apparent from the examples of embodiment to be described herein after concerning the appended drawings, which are explained concerning the examples of embodiment. However, the disclosure is not limited to the examples of embodiment.

All illustrations in the drawings are schematical. It is noted that in different figures, similar or identical elements or features are provided with the same reference signs or with reference signs that are different from the corresponding reference signs only within the first digit. To avoid unnecessary repetitions, elements or features that have already been elucidated concerning a previously described embodiment are not elucidated again later in the description.

Various example embodiments may be more completely understood considering the following detailed description in connection with the accompanying drawings.

FIG. 1 is a block diagram of an RF system with conventional DC-offset calibration;

FIG. 2 shows an IQ diagram with a principle of DC-offset calibration;

FIG. 3a shows received input RF signals as an input to an RF system;

FIG. 3b shows an IQ plane with two output signals of a conventional RF calibration device;

FIG. 3c shows another representation of the signals of FIG. 3b;

FIG. 4 shows signals assigned to frame delay time deviations for a specific hardware;

FIG. 5 is a block diagram of an RF system with an embodiment of the disclosed digital calibration device;

FIG. 6 is a block diagram showing the filters of the disclosed calibration device in more detail;

FIG. 7 is a diagram showing a working principle of an IQ combiner of the disclosed calibration device;

FIG. 8 shows a working principle of the control logic of the low-level detector;

FIG. 9 is a block diagram showing the level detector of the disclosed calibration device in more detail;

FIG. 10 is the diagram of the IQ plane illustrating a working principle of the disclosed method of removing DC offset;

FIG. 11a shows an assignment of conventionally calibrated signals to frame delay time;

FIG. 11b shows an assignment of calibrated signals according to the disclosed method to frame delay times;

FIG. 12a shows an IQ signal of a demodulator output without having provided optimized ADC data; and

FIG. 12b shows an IQ signal of a demodulator output having been provided with optimized ADC data according to the disclosed method.

While various embodiments discussed herein are amenable to modifications and alternative forms, aspects thereof have been shown by example in the drawings and will be described in detail. It should be understood, however, that the intention is not to limit the disclosure to the particular embodiments described. On the contrary, the intention is to cover all modifications, equivalents, and alternatives falling within the scope of the disclosure, including aspects defined in the claims. In addition, the term "example," as used throughout this application, is only by way of illustration and not limitation.
It is noted that the embodiments above have been described concerning different subject-matters. In particular, some embodiments may have been described with reference to apparatus-type claims whereas other embodiments may have been described regarding method-type claims. However, a person skilled in the art will gather from the above that, unless otherwise indicated, in addition to any combination of features belonging to one type of subject matter also any combination of features relating to different subject matters, in particular a combination of features of the method-type claims and features of the apparatus-type claims, is considered to be disclosed with this disclosure.

DESCRIPTION OF EMBODIMENTS

In the following description, various details are set forth to describe specific examples presented herein. It should be apparent to one skilled in the art, however, that one or more other examples and/or variations of these examples may be practiced without all the specific details given below. In some other cases, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

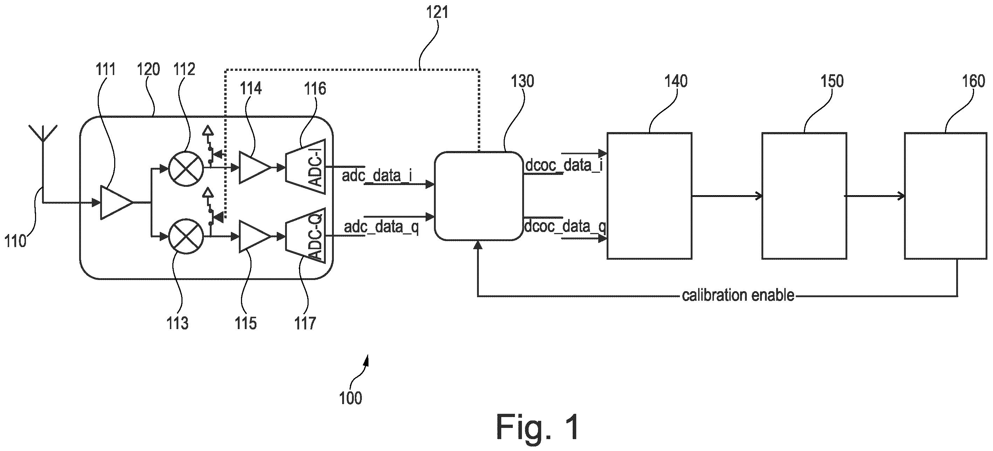

FIG. 1 is a block diagram of an RF-system 100 comprising a receiver 120 and a downstream conventional digital calibration device 130. An antenna 110 is coupled to the receiver 120 and receives RF signals (not shown). A first amplifier 111 is coupled to an output of the antenna 110 and analog mixers 112, 113. Outputs of the two mixers 112, 113 respectively, are fed to amplifiers 114, 115 respectively, which are coupled to ADCs (analog digital converters) providing digital I-channel data and Q-channel data, respectively. A bypass signal 121 between the digital calibration device 130 and the outputs of the mixers 112 and 113 is intended to put the outputs of the mixers 112 and 113 to ground potential. As a result, the outputs of the ADCs 116, 117 for the I- and Q-channel, respectively, provide calibrated data at outputs of the receiver 120 to a downstream ASK demodulator 140, which is coupled to a protocol decoder 150, the protocol decoder 150 being coupled to a host 160. The host 160 is functionally coupled to the digital calibration device 130. The two ADCs 116, 117 generate continuous analog voltages in a specified range and in time and discretize the voltages to numbers for the I-channel and the Q-channel, respectively, e.g. translate an exemplary input number 1.2 to an exemplary binary value 001. All of the elements of the receiver 120 may introduce an unintended DC offset into the RF-system 100.

The RF-system 100 of FIG. 1 may be realized as an NFC-controller, which may be used in mobile phones for wireless transactions, payments, fare transactions, etc. The digital calibration device 130 aims to estimate an intrinsic DC-offset constantly present in the ADC outputs adc_data_i, adc data_q of the receiver 120 and to remove said DC offset mathematically. The resulting data cleaned from DC-offset signals dcoc_data_i, dcoc data_q are properly aligned to demodulator detect LOW (0) and HIGH (0) states (not shown) for ASK demodulation purposes. The conventional digital calibration device 130 usually operates offline, i.e., is just enabled during test or calibration phases, but not in a reception mode of the RF system 100. Depending on the RF-system 100, the digital calibration device 130 may be implemented inside the receiver 120 (not shown).

The conventional digital calibration devices 130 usually calculates the DC offset putting the receiver 120 in a known "bypass" state using the bypass signal 121, where all internal signals that could contribute with DC are grounded and a LOW(0) state is expected at the output of the ADC. More complex systems could also include more known states to estimate DC offset more accurately. The grounding could be, e.g., done once before any reception at all. The bypassing brings the RF system 100 to a state where it is easy to measure the DC offset, i.e it sets the input signal to GND so that the outcoming of the receiver 120 is the DC offset only. At the output of the receiver 120 a digital signal in digits plus an unwanted DC offset (which needs to be corrected) is seen as adc_data_i, adc_data_q. The DC offset reduces the dynamics of reception data, wherein less dynamics means less performance.

In short-channel semiconductor technologies like, e.g., TSMC 28nm (Taiwan Semiconductor Manufacturing Company), it is observed that although a main DC-offset component of the ADC-output signals is compensated, there may still be residual offset after calibration.

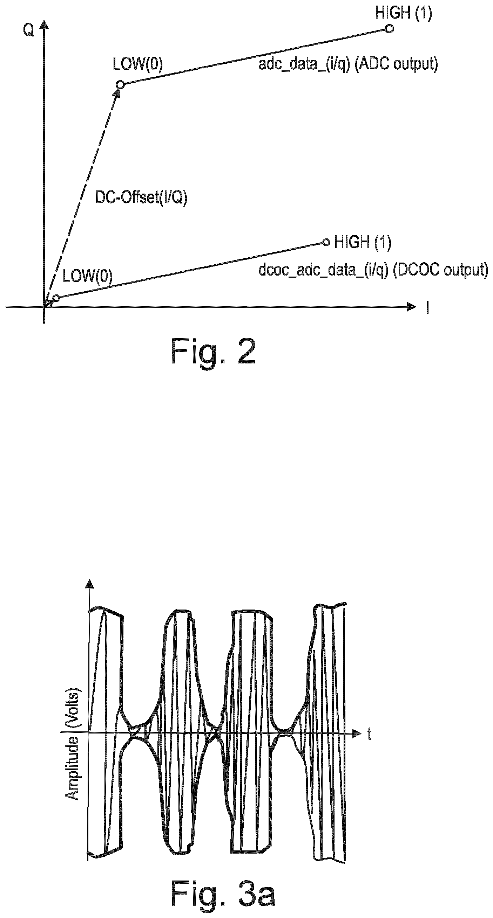

FIG. 2 shows a DC-offset compensation performed by the conventional digital calibration device 130 of FIG. 1. An IQ plane has in the upper part a signal adc data_(i/q) (output data of ADCs 116, 117) represented by states LOW(0), HIGH(1) and loaded with DC Offset(I/Q), which is depicted as a vector between the origin of the IQ plane and the upper state LOW(0) and is intended to be eliminated. The solid line between the states LOW(0) and HIGH(1) illustrates a dynamic process, wherein the signal is sampled to discretize it not only in values but also in time (indicated by the states LOW(0) and HIGH(1). The signal cannot be fully compensated in a conventional way as shown in a lower part of the IQ plane of FIG. 2, because a minor DC offset is still present, represented by a small arrow between the origin of the IQ plane and the lower state LOW(0).

In a digital RF communication system multiple transitions overlap from state LOW(0) to state HIGH(1) and vice versa, whereby the states LOW(0) and HIGH(0) are provided for certain amounts of time. These transitions cannot be performed infinitely fast, so a certain amount of time is needed for those transitions, due to the physical effect of DC-offset (direct current offset), which comes from the receiver.

FIG. 3a shows a signal over time t identified at the antenna 110 of the RF system 100 and provided e.g. at the input or at the output of the first amplifier 111 of the receiver 120.

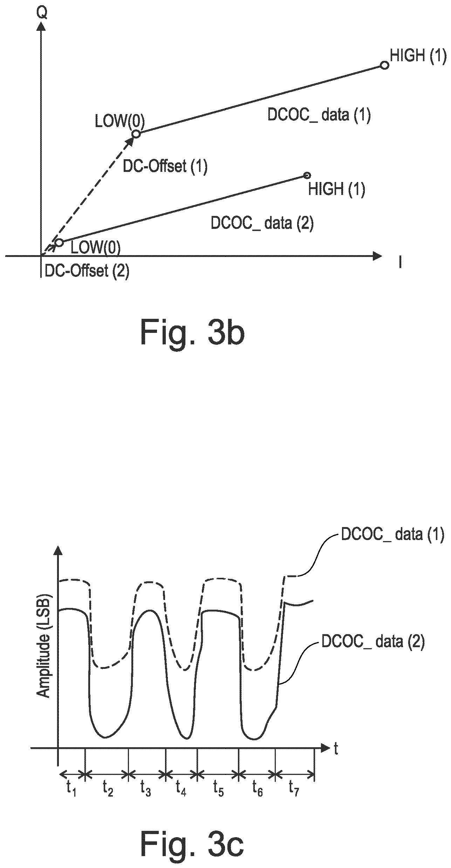

FIG. 3b shows a diagram similar to the diagram of FIG. 2. It represents output signals DCOC data (1) and DCOC data (2) (DC offset calibration data) of the digital calibration device 130 at two different conditions of the RF system 100. The DCOC data (1) contains more DC offset, than the DCOC data (2), represented by a longer arrow between the origin of the IQ plane than between the origin of the IQ plane and DCOC data (2). For example, if the receiver 120 is activated, first transactions are performed and provide DCOC output (1). A following transaction provides a DCOC output (2) with less DC offset. In other words, the signals and the DC offset are not constant but can vary over time and/or operational conditions of the RF system 100. In other words, the output data of the conventional digital calibration device 130 may vary over time t.

FIG. 3c is another representation of the signals of FIG. 3b and shows two output signals of the calibration device 130 DCOC_data (1) and DCOC_data (2), respectively, after demodulation in the time domain. Due to not being fully DC offset compensated, the DC component is present in the output with a loss of amplitude in the signal and consequently a loss of SNR (signal noise ratio). As a result, the signal DCOC_data (1) has a limited span. It can be seen, that the signal DCOC_data (2) is fully compensated and the signal DCOC_data (1) is partially compensated. During periods t1, t3, t5 and t7 the signal may be sampled and interpreted as state HIGH (1), during periods t2, t4 and t6 the signal may be sampled and interpreted as state LOW(0).

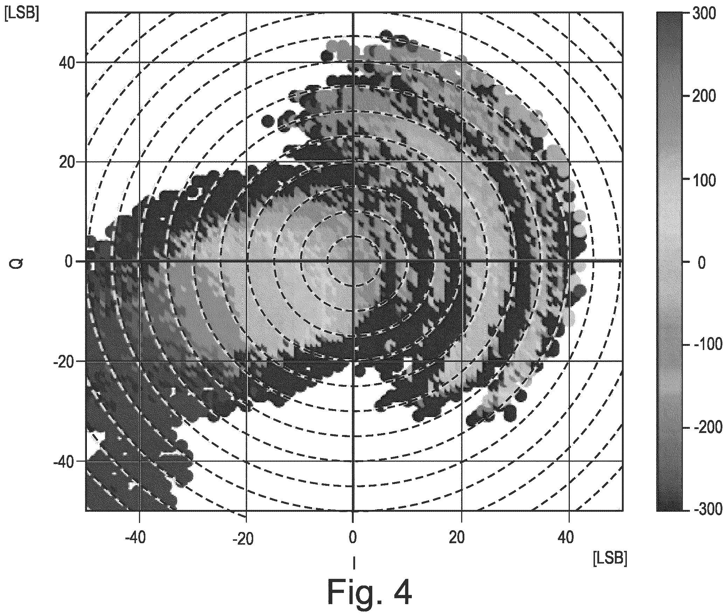

FIG. 4 shows a diagram with a plurality of measurement data and simulation data in the IQ plane over LSB in I and Q, wherein one single dot of FIG. 4 corresponds to one signal representation of FIGs. 2, 3b. Shifts of low/high signal values in terms of LSB (least significant bits) are assigned to an FDT (frame delay time) range between -300ns and +300ns. The shifts originate from DC offsets that are not adequately compensated. An FDT tolerance concerning the jitter is approximately 400ns, which represents a window of 400ns (e.g., between -200ns and +200ns, -100ns and +300ns,, -300ns and +100ns, etc.) in the shown range of -300ns to +300ns shown on the right-hand side of FIG. 4.

Without any DC offsets (not possible in the real world), one would end up in the crossing of the I-axis and Q-axis of the IQ plane. The results of simulations are shown, where they are manipulated by intent, a contribution of I-channel data and Q-channel data, resulting in a vector length in the amount of LSB. The kind of DC offset is varied, in this way it can be seen where performance concerning FDT is won or lost. These circumstances are encoded using different shades of gray. A jitter is a non-precision where a repetitive frame signal does not come every time in time; it always varies fairly slightly. Shown is a correlation of I-channel data and Q-channel data to a range of FDT from -300 ns (next frame signal 300ns too early) until 300ns (next frame signal 300ns too late). The diagram takes into account conventional chip used in the RF system 100. Different shades of grey underline the fact that there areas are areas where it is hard to fulfil performance or requirements of ISO/IEC 14443-2 Type-A standards concerning the mentioned conventional hardware. Shown are dotted circles, wherein circles with a diameter of approximately 10 LSB have very few deviations of -300ns or +300ns. FIG. 4 also shows that in cases where DC offset values are not that high, the signals may nevertheless be faced with high FDT, e.g. shown in the second and third dashed circles of FIG. 4. FIG. 4 also emphasizes that FDT deviations go outside the specification (+/-200ns) for low values of residual DC-offset. Within the first inner three dotted circles, no FDT above approximately 150ns should be present, which is, however, not the case in the diagram of FIG. 4.

When not properly compensated, the residual DC offset can also distort the waveshape of the demodulated signal, which could introduce a jitter in the reception. This jitter is critical in protocols like ISO/IEC 14443-2 type-A, where the frame delay time (FDT) tolerance is around 400ns.

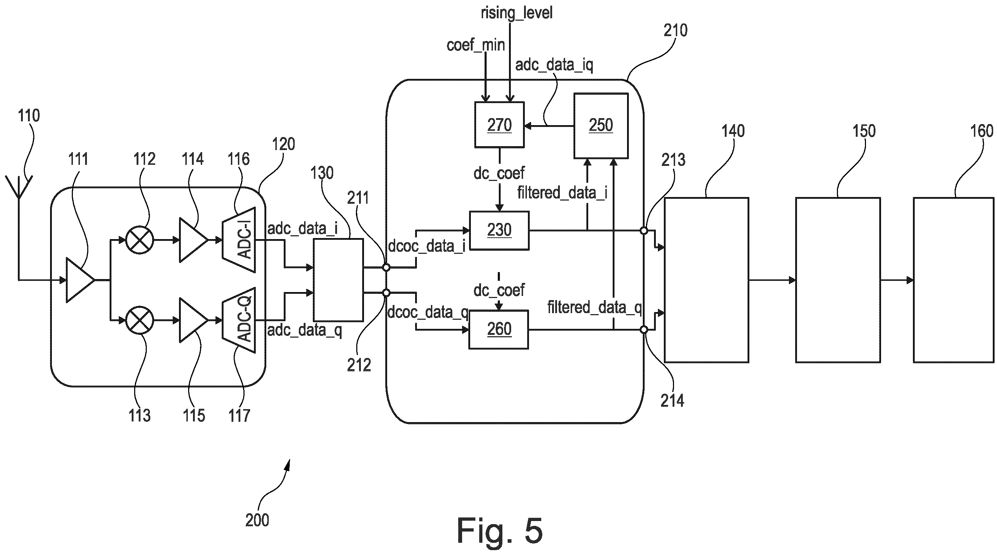

FIG. 5 is a block diagram of an RF-system 200 with an embodiment of the disclosed digital calibration device 210. The RF system 200 represents a use case of NFC communication according to ISO standard 14443-2 Type-A. The RF system 200 may implement a calibration device 210 in addition to the (optional) conventional static calibration device 130 shown in FIG. 1. In an alternative (not shown), the disclosed calibration device 210 may be realized as a single DC offset calibration device.

An idea is to estimate the DC offset dynamically from ADCs 116, 117 based in a digital domain. This can be interpreted as a tracking of the digital domain after the ADCs 116, 117 and provided e.g. as digital values, preferably digital LSBs. For this purpose, the DC-offset calibration device 210 performs a dynamic DC offset calibration after or in substitution to an existent DC offset calibration block. The calibration device 210 comprises three main sub-blocks: filters 230, 260, a combining element (IQ combiner) 250 and a level detector 270, wherein all components are functionally coupled in a loop.

The filters 230, 260 are preferably implemented as 1$^{st}$-order IIR filters (Infinite Impulse Response Filter), which represent high pass filters that estimate the DC offset in I- and Q-channels, wherein operation characteristics of the filters 230 and 260 are controlled by a filter coefficient dc_coef which is provided by the level detector 270. A high-pass filter (HPF) is a signal-processing filter that allows frequencies higher than a certain cutoff frequency fc to pass through while attenuating frequencies lower than the cutoff frequency fc. The cutoff frequency fc is a threshold frequency that separates the passing high frequencies from the attenuated low frequencies. It is defined as the frequency at which the output signal power drops to half its maximum value (or the output voltage drops to 70.7% of its maximum value, which is 3 dB down from the passband level). The filters 230, 260 are configured to remove the DC offsets of input A/D circuit data provided at inputs 211, 212 of the calibration device 210. The IQ combiner 250 is configured to combine the filtered and DC-offset removed I-channel data and Q-channel data. The resulting output of the IQ combiner 250 is a magnitude value expressed as:

$$\text{sqrt}(I\char`\^2 + Q\char`\^2) \qquad (1)$$

The level detector element 270 is configured to calculate filter coefficients dc_coef based on the level of the magnitude value provided by the IQ combiner 250. The level detector 270 may be controlled by two configurable parameters, coef_min value and rising_level, which are tuned depending on the specific application of the RF system 200. Different applications of the RF system 200 (e.g. NFC, RFID contactless payments, etc.) result in different levels of noise, working conditions, frequency, nature of expected signal, etc., which may be taken into account by these two parameters.

The RF system 200 of FIG. 5 receives at inputs 211, 212 data from the conventional calibration device 130 having residual DC offset, wherein the filters 230, 260 are operated in a way, that it estimate the DC offset and removes it, as described in more detail below.

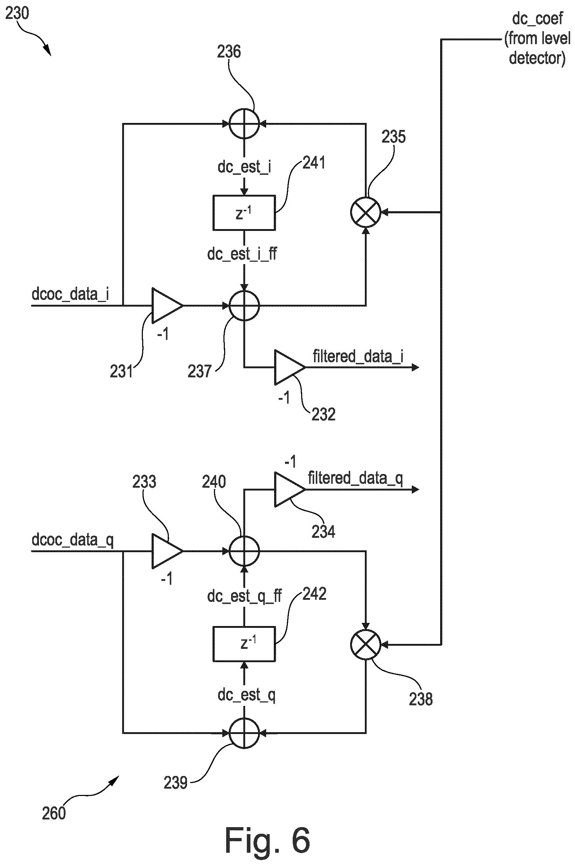

FIG. 6 shows the filters 230, 260 in more detail, wherein both filters 230, 260 are identical in structure and functionality. The filters 230, 260 act responsive to inputs of filter coefficients dc_coef being provided by the level detector 270. The level detector 270 is configured by bounds in which it should operate and where the system is in a kind of state in which it shall behave. Both 1st order filters 230, 260 estimate the I- and Q-channel DC-offset values and remove them from the inputs mathematically in the following way:

$$dc\_est\_i[n] = dcoc\_data\_i[n] + dc\_coef \times (dc\_est\_i[n-1] - dcoc\_data\_i[n])$$

$$dc\_est\_q[n] = dcoc\_data\_q[n] + dc\_coef \times (dc\_est\_q[n-1] - dcoc\_data\_q[n])$$

dc_est_ i .... estimated I channel data
dc_est_q .... estimated Q channel data
dcoc_data_i .... compensated I channel data
dcoc data_q .... compensated Q channel data

The filtered data are calculated by the filters 230, 260 cyclically in the following way:

$$filtered\_data\_i[n] = dcoc\_data\_i[n] - dc\_est\_i[n-1]$$

$$filtered\_data\_q[n] = dcoc\_data\_q[n] - dc\_est\_q[n-1]$$

n .... step n
n-1 .... step n-1

The above mentioned mathematical operations of the filters 230, 260 are performed by multipliers 231, 232, adders 236, 237 and multipliers 235, 238 which perform the filtered data out of the input data in the above illustrated way. As regards the I channel data and Q channel data, the multipliers 231, 233 multiply dcoc_data_i, dcoc data_q, respectively by - 1. Memory elements 241, 242 take a value of estimated DC offset data earlier. In effect, the memory elements 241, 242 memorize one value and take the former value, e.g. dc_est_i, dc_est_q could be the actual samples.

An internal functionality of the IQ combiner 250 performing an IQ combination following complex mathematics wherein the magnitude value is estimated out of the filtered IQ-data in the following way:

$$adc\_data\_iq = sqrt(filtered\_data\_i^2 + filtered\_data\_q^2) \qquad (2)$$

To calculate equation (2), the phase may be iteratively rotated (multiplying by $e^{j*phi}$) until the imaginary part (c_xout) is almost zero:

$$phi(0) = 0$$

$$while \ (q\_xout(j) > 0)$$

$$c\_xout=(cos(phi(j))+i*sin(phi(j))) * (i\_data\_d(j)+i*q\_data\_d(j));$$

$$i\_xout(j)=real(c\_xout);$$

$$q\_xout(j)=imag(c\_xout);$$

$$phi(j+1) = phi(j) + 0.1875*q\_xout(j)$$

$$adc\_data\_iq = i\_xout \qquad (3)$$

This magnitude value can be estimated iteratively as described above through the calculation system (3) or using other methods, such as gradient descent, CORDIC algorithms, etc. The implementation could thus be done in a variety of ways and has no impact on the final DC offset cancellation.

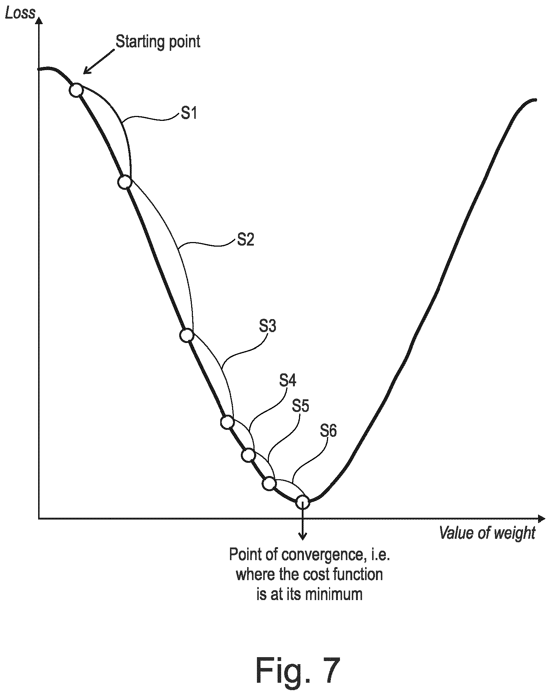

A graphic representation of the performance of the above calculation system (3) is shown in FIG. 7, choosing a starting point. By means of the calculation system (3) the square root of $I^2 + Q^2$ is approximated, wherein incremental steps S1... S6 are performed. In this way, an optimization problem is solved, where an optimized solution is searched for the problem to calculate the system (3) iteratively. If the loss function is a minimum, the result is achieved in that the output of this calculus is the same as the SQRT $I^2 + Q^2$ (magnitude value). Hence, the IQ combiner 250 iteratively and continuously calculates the sqrt of I-channel data and Q-channel data not exactly, however, under saving a lot of chip area and power.

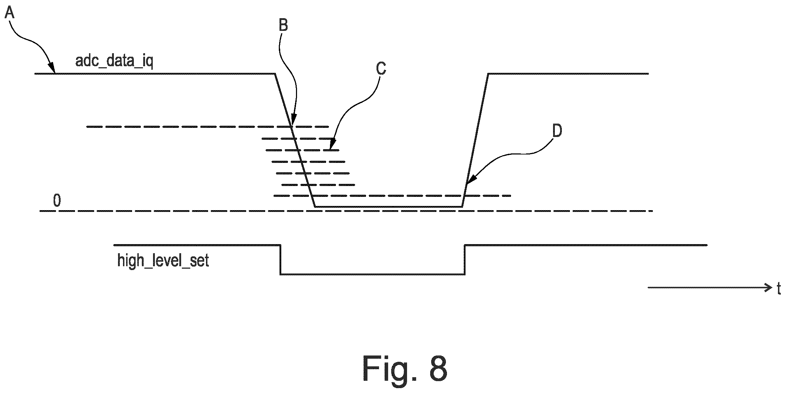

The adaptation procedure of the above-mentioned cut-off frequency fc is shown in FIG. 8, which illustrates a working principle of the logic of the level detector 270. The filter coefficient dc_coef is intended to adapt operational characteristics of the filters 230, 260. The cut off frequency fc of the filters 230, 260 is defined by the filter coefficient dc_coef. In more detail, a first threshold level is determined (e.g. 0.85) to specify a high amplitude of the magnitude value. In effect, the nearer the signal goes to the zero line, the more is filtered the signal and vice versa. The cut-off frequency fc of the filters 230 and 260 is based on the level of the magnitude value of adc_data_iq and is thus controlled. In other words, the cut-off frequency fc of the filters 230, 260 is adapted based on the level of the signal adc_data_iq provided by the IQ combiner 250.

The algorithm identifies a level of the signal adc_data_iq. To solve equation (4) it is checked whether the system is in a modulation or a non-modulation part. To this end, it is checked whether the signal is outside of a trapezoid of the signal adc_data_iq or in the falling edge. As a consequence, the DC offset is removed by means of the filters 230, 260 only in a case when the signal is "in the valley" of the signal.

To this end, at point A, a high level of the signal adc_data_iq is estimated. At point B, a current level of the filter coefficient coef_min is set to minimum when the level of the signal adc_data_iq is less than 0.85 of the level at point A. Furthermore, the high_level setting is cleared. Between points B and C the filter coefficient coef_min is increased proportional corresponding to the value of adc_data_iq stepwise as the level of adc_data_iq decreases by steps of 5% until the signal hits the zero line. At a point D, the signal goes above a specified rising_level, this is the end of the low level detector process, the high_level set is asserted. In other words, a second threshold is defined for rising edges of the signal adc_data_iq which is preferably 0.3 of the high level of adc_data_iq. When the second theshold is hit, the filtering is stopped, i.e. the maximum value is set for the coefficient. The values of the two mentioned threshold values can be trimmed, depending on the application.

This process represents a four step approach, wherein when the signal goes above the rising level, this high level is changed back to the ADC data_iq high level.

In different applications (e.g. payment) of the RF system 200 there are different changes over time. For example, in payment applications there are DC levels that are changing e.g. every 20s, wherein frequencies below 212.4 kHz are taken as communication information. Other applications using narrower distances, frequency or components of the DC behave different due to the application. This means that a retuning of the filter coefficient minimum is necessary for the correct performance of the application. The filter coefficients dc_coef are thus application dependent, wherein a boundary can be shifted with the parameter coef_min.

As a result, a higher priority of filtering lower levels of the signal adc_data_iq is given. The filtering is thus "less aggressive" with higher signal levels and "more aggressive" with lower signal levels. By this filtering, only little, preferably no, user data are cut off; however, by adapting the operational characteristics of the filters 230 and 260, the DC offset is removed from the signals. By adaptively changing the filter coefficient dc_coef dynamic filtering characteristics of the filters 230 and 260 are obtained.

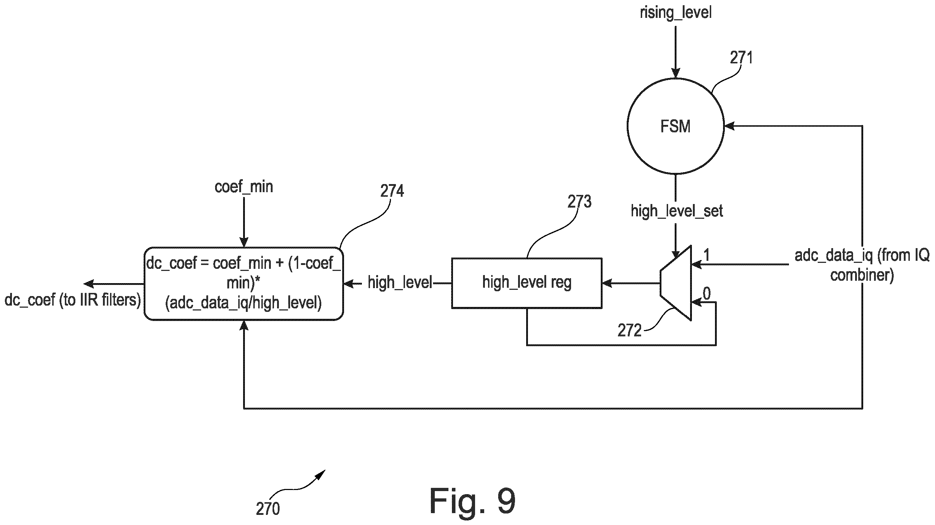

The above illustrated algorithm may be realized using a level detector 270 shown in FIG. 9. The level detector 270 is fed by the combined data adc_data_i, data adc data_q from the IQ combiner 250. The level detector 270 is configured to estimate the high-level value of said combined data using a control logic as illustrated in more detail below in the context of the level detector logic that depends on a parameter rising_level and the output of the IQ-combiner 250. The above mentioned 2nd threshold is fed to a FSM (Finite State Machine) 271, wherein the FSM 271 tracks the data until the first threshold of 0.85 and samples the high level value. A logic 274 is performing the conversion from the level to the filter coefficient dc_coef in the following way:

$$\text{dc\_coef} = \text{coef\_min} + (1 - \text{coef\_min}) \times (\text{adc\_data\_iq}/\text{high\_level}) \qquad (4)$$

The setting of the parameter rising_level defines the sensitivity of the detection, wherein a value of e.g. approximately 0.30 is recommended. Of course, alternative values for the parameter rising_level are also possible. The estimated high level is stored in a register 273 and used to calculate the filter coefficient dc_coef value based on a minimum value coef_min of the filter coefficient. The coef_min value determines the minimum cut-off frequency (fc) as follows:

$$\text{fc} = -\ln(\text{coef\_min})/(2 \times \text{pi}) \times \text{fs} \qquad (5)$$

fs .... sampling frequency [Hz]

fc .... cut-off frequency [Hz]

For example, if coef_min is 0.9062 and the sampling frequency fs = 13.56MHz, then the cut off frequency fc is -212.4kHz. So, during a low-level any frequency above 212.4kHz will be filtered out as noise and not considered as DC offset.

Hence, with respect to FIG. 3a if the signal is in the valley, as much DC offset as possible is removed. However, on peak values when high numbers are provided, no more DC offset than mandatory is removed. In other words, the algorithm intends to remove the DC offset in the notches of the signal. The calibration device 210 and all components are preferably realized as hardware.

It should be noted that the implementation using the level detector 270 and its components shown in FIG. 9 is merely exemplary, and numerous other implementations, not shown here, are possible for determining the filter coefficient dc_coef.

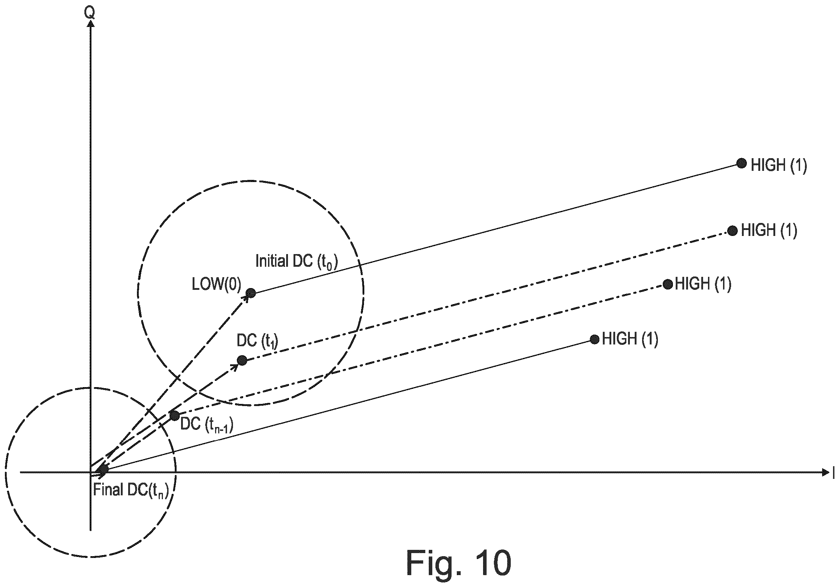

FIG. 10 shows a working principle of the dynamically estimated limits of the level detector 270 with the effect of filtering DC offsets. A signal is changing from the initial value Initial DC (t0). The algorithm that drives the filter coefficient is estimated by the DC offset, and progressively, this DC offset is subtracted from the signal. As a consequence, the signal goes down from DC (t1) to DC(t1), DC (tn-1) and finally DC (tn). DC (tn) represents the final compensation with an optimal reduced DC offset. Dotted circles show the changing thresholds having illustrated above in the context of FIG. 8. The four data of FIG. 10 correspond to four measurements during the steps A, B, C and D shown in the context of FIG. 8. Shown is an IQ plane with two circles with different diameters, representing dynamically estimated filter coefficients provided by level 270. In the course of the disclosed method, it is intended to shrink these circles dynamically. For example, an initial DC offset value DC (t0), a further DC offset value DC (t1) after one step, a further DC offset value DC(tn-1) and finally, after n steps, the DC offset value DC (tn). In effect, this represents an iterative process. Due to the fact, that the points LOW(0) are moving closer to the origin of the IQ plane, the compensation effect is optimized. By a reset of the RF system 200, the process starts from the beginning.

An underlying working principle of the disclosed method is to estimate dynamically the distance between HIGH and LOW symbols by tracking the IQ-combined signal and to adjust the IIR filters coefficients accordingly. In a case, that the signal is defined to a high level, the filters 230, 260 will receive a filter coefficient dc_coef near to 1, therefore they do not affected the input data. In a case, that the signal is defined to a low level, the filters 230, 260 will receive a minimum value of the filter coefficient dc_coef, and therefore they will filter the input.

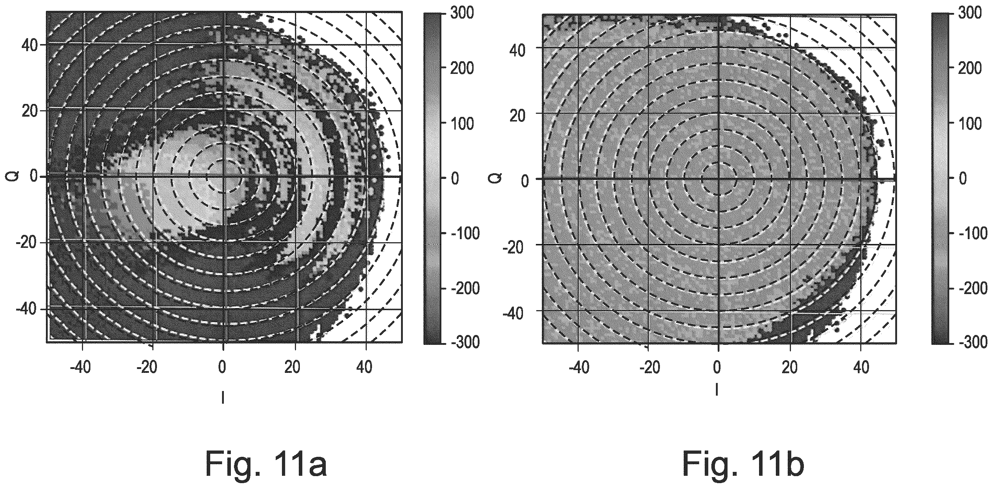

FIG. 11a and FIG. 11b show simulation and measurement results for a variety of signals. The proposed circuit was implemented to decode the standard ISO/IEC 14443-2 to overcome FDT jitter issues found in latest silicon version. FIG. 11b indicates a robustness of the proposed solution against DC offset.

FIG. 11a shows a high amount of black dots inside the dotted circles, which represent a worst case scenario, where signals poorly fulfil the standard ISO/IEC 14443-2. Intended is a state in between +-200ns, wherein it is intended to provide as many circles as possible free of dots according to high FDTs. FIG. 11b show that circles that mainly contain dots corresponding to FDTs between approximately 0ns and approximately -150ns, which is a majority compared with the conditions in FIG. 11a.

With the disclosed dynamic DC offset compensation the impact of the timing and the jitter itself for the ASK-demodulation may advantageously be removed. In effect, with respect to FIG. 3c, the disclosed method transforms dashed signals to solid line signals.

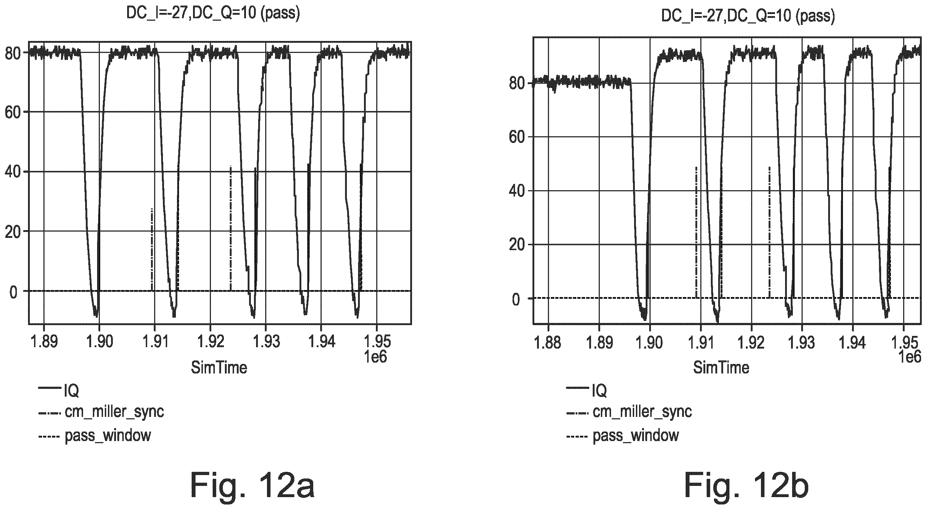

FIG. 12 shows that the proposed circuit has higher amplitude in comparison to state-of-the-art for a case of high-residual DC-offset (more than 20LSB DC). "Span" is to be seen as the range between the highest value and the smallest value of the signal. FIG. 12a shows another representation of one of the single dots of FIGs. 2, 3b as an output of the disclosed DC offset calibration device. One recognizes the specified span of the signal of approximately between approximately +80 and -10.

FIG. 12b shows IQ signals in the time domain in demodulator output for a high-residual DC offset case (DC_I=-27LSB and DC_Q=10LSB). The disclosed calibration device 210 provides signals with 90 LSB amplitude, in comparison to the conventional calibration circuit 130 providing signals with 80LSB.

In comparison thereto, FIG. 12b shows a signal having been processed by means of the disclosed method has a higher span of the signal we listening with his main with the swing from approximately +90 to -10, which means that there is a gain of 10 LSB. Miller sync pulse indicates that the frame delay time FDT is appropriate.

The present disclosure proposes a method to dynamic perform DC offset calibration in the digital domain without having to intervene in analog-side using DACs (digital to analog converters) and without having to disable it during reception of RF signals.

The disclosed method and digital calibration device may preferably be used in RF receivers that implement ASK-modulated protocols, such as RFID and NFC.

Where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

Reference signs:

| | |
|------|-----|
| 100 | RF system |
| 110 | antenna |
| 111 | 1st amplifier |
| 112 | 1st mixer |
| 113 | 2nd mixer |
| 114 | 2nd amplifier |
| 115 | 3rd amplifier |
| 116 | I-channel ADC |
| 117 | Q-channel ADC |
| 120 | receiver |
| 121 | bypass signal |
| 130 | digital calibration device |
| 140 | ASK-demodulator |
| 150 | protocol decoder |
| 160 | host |
| 200 | RF system |
| 210 | digital calibration device |
| 211,212 | inputs |
| 213,214 | outputs |
| 230 | 1st filter |
| 231-235 | multipliers |
| 236,237 | adder |
| 238 | multiplier |
| 239,240 | adder |
| 241, 242 | storage elements |
| 250 | combining element |
| 260 | 2nd filter |
| 270 | level detector |
| 271 | FSM Finite State Machine |
| 272 | logic element |
| 273 | register element |
| 274 | calculation element |
| S1-S6 | steps |

**Claims**

1. A digital calibration device (210) for an RF-system (200), the digital calibration device (210) comprising

a first input (211) configured to receive I-channel data and a second input (212) configured to receive Q-channel data;
a first filter (230) coupled to the first input (211) and configured to estimate a DC offset of the I-channel data and to subtract the estimated DC offset from the I-channel data to provide filtered I-channel data;
a second filter (260) coupled to the second input (212) and configured to estimate a DC offset of the Q-channel data and to subtract the estimated DC offset from the Q-channel data to provide filtered Q-channel data;
a combining element (250) configured to receive the filtered I-channel data and the filtered Q-channel data and to provide a specified magnitude value (adc_data_iq) based on the filtered I- and Q-channel data; and

a level detector (270) configured to receive the specified magnitude value of the filtered I-channel data and Q-channel data and to provide a filter coefficient (dc_coef) both for the first filter (230) and the second filter (260) depending on the specified magnitude value (adc_data_iq).

2. The digital calibration device (210) according to claim 1, wherein at least one of the first filter (230) and the second filter (260) is an Infinite Impulse Response, IIR filter configured to filter input signals in dependence on the filter coefficient (dc_coef) provided by the level detector (270).

3. The digital calibration device (210) according to claim 1, wherein a cut off frequency (fc) of at least one the first filter (230) and the second filter (260) is determined by the following equation:

$$fc = -\ln(\text{coef\_min})/(2 \times pi) \times fs$$

whereas fs is a sampling frequency [Hz] and fc is the cut-off frequency [Hz].

4. The digital calibration device (210) according to one of the preceding claims, wherein the combining element (250) is configured to estimate the specified magnitude value (adc_data_iq) based on the following formula:

$$\text{magnitude value (adc\_data\_iq)} = \text{sqrt (filtered I-channel data}^2 + \text{filtered Q-channel data}^2).$$

5. The digital calibration device (210) according to one of the preceding claims, wherein the level detector (270) is configured to deliver the filter coefficient (dc_coef) depending on specified thresholds of the specified magnitude value (adc_data_iq).

6. The digital calibration device (210) according to claim 5, wherein the provision of the filter coefficient (dc_coef) of the level detector (270) is controlled by at least one of a first parameter (coef_min) and a second parameter (rising_level).

7. The digital calibration device (210) according to claim 6, wherein the first parameter (coef_min) specifies a maximum of the magnitude value (adc_data_iq) as a basis for calculating a minimum value of the filter coefficient (dc_coef).

8. The digital calibration device (210) according to claim 5 or 6, wherein the second parameter (rising_level) specifies a rising level of the magnitude value (adc_data_iq) after having reached a minimum of the magnitude value (adc_data_iq).

9. The digital circuit (210) according to one of the preceding claims, wherein the first filter (230), the second filter (260), the combining element (250) and the level detector (270) are configured for being operated clocked.

10. A method for dynamically removing DC-offset of modulation data of an RF-system (200), the method comprising:

(i) receiving I-channel data at a first input (211) and Q-channel data at a second input (212) of a digital calibration device (210);
(ii) estimating a DC-offset of the received I-channel data and Q-channel data, wherein a proximity of the I-channel-data and Q-channel data to an origin of an IQ-plane is determined;
(iii) determining a specified magnitude value (adc_data_iq) based on the proximity of the I-channel-data and Q-channel data to the origin of an IQ-plane is determined;
(iv) determining a filter coefficient (dc_coef) for a first filter (230) and a second filter (260) depending on the specified magnitude value (adc_data_iq);
(v) removing the DC-offset from the received I-channel data and Q-channel data depending on the filter coefficient (dc_coef); and
(vi) providing filtered I-channel data and filtered Q-channel data.

11. The method according to claim 10, wherein in step (iii) a specified magnitude value (adc_data_iq) is determined based on the following formula:

$$\text{magnitude value (adc\_data\_iq)} = \text{sqrt (filtered I-channel data}^2 + \text{filtered Q-channel data}^2).$$

**12.** The method according to claim 10, wherein step (ii) comprises determining the value of the DC-offset and step (ii) comprises subtracting the DC- offset from I-channel data and from the Q-channel data.

**13.** The method according to claim 10, wherein the steps (i) to (v) are performed iteratively and clocked.

**14.** The method according to claim 10, wherein in step (vi) the filtered I-channel data and the filtered Q-channel data are provided to an ASK-demodulator. (140).

**Amended claims in accordance with Rule 137(2) EPC.**

**1.** A digital calibration device (210) for an RF-system (200), the digital calibration device (210) comprising

a first input (211) configured to receive I-channel data and a second input (212) configured to receive Q-channel data;

a first filter (230) coupled to the first input (211) and configured to estimate a DC offset of the I-channel data and to subtract the estimated DC offset from the I-channel data to provide filtered I-channel data (filtered_data_i);

a second filter (260) coupled to the second input (212) and configured to estimate a DC offset of the Q-channel data and to subtract the estimated DC offset from the Q-channel data to provide filtered Q-channel data (filtered_data_q);

a combining element (250) configured to receive the filtered I-channel data (filtered_data_i) and the filtered Q-channel data (filtered_data_q) and to provide a specified magnitude value (adc_data_iq) based on the filtered I-channel data (filtered_data_i) and filtered Q-channel data (filtered_data_q); and

a level detector (270) configured to receive the specified magnitude value of the filtered I-channel data (filtered_data_i) and Q-channel data (filtered_data_q) and to provide a filter coefficient (dc_coef) both for the first filter (230) and the second filter (260) depending on the specified magnitude value (adc_data_iq).

**2.** The digital calibration device (210) according to claim 1, wherein at least one of the first filter (230) and the second filter (260) is an Infinite Impulse Response, IIR filter configured to filter input signals in dependence on the filter coefficient (dc_coef) provided by the level detector (270).

**3.** The digital calibration device (210) according to claim 1, wherein a cut off frequency (fc) of at least one the first filter (230) and the second filter (260) is determined by the following equation:

$$fc = -\ln(coef\_min)/(2 \text{ x pi}) \text{ x fs}$$

whereas fs is a sampling frequency [Hz] and fc is the cut-off frequency [Hz].

**4.** The digital calibration device (210) according to one of the preceding claims, wherein the combining element (250) is configured to estimate the specified magnitude value (adc_data_iq) based on the following formula:

$$\text{magnitude value (adc\_data\_iq)} = \text{sqrt (filtered I-channel data}^2 + \text{filtered Q-channel data}^2).$$

**5.** The digital calibration device (210) according to one of the preceding claims, wherein the level detector (270) is configured to deliver the filter coefficient (dc_coef) depending on specified thresholds of the specified magnitude value (adc_data_iq).

**6.** The digital calibration device (210) according to claim 5, wherein the provision of the filter coefficient (dc_coef) of the level detector (270) is controlled by at least one of a first parameter (coef_min) and a second parameter (rising_level).

**7.** The digital calibration device (210) according to claim 6, wherein the first parameter (coef_min) specifies a maximum of the magnitude value (adc_data_iq) as a basis for calculating a minimum value of the filter coefficient (dc_coef).

**8.** The digital calibration device (210) according to claim 5 or 6, wherein the second parameter (rising_level) specifies a rising level of the magnitude value (adc_data_iq) after having reached a minimum of the magnitude value (adc_data_iq).

9. The digital circuit (210) according to one of the preceding claims, wherein the first filter (230), the second filter (260), the combining element (250) and the level detector (270) are configured for being operated clocked.

10. A method for dynamically removing DC-offset of modulation data of an RF-system (200), the method comprising:

(i) receiving I-channel data at a first input (211) and Q-channel data at a second input (212) of a digital calibration device (210);
(ii) estimating a DC-offset of the received I-channel data and Q-channel data, wherein a proximity of the I-channel-data and Q-channel data to an origin of an IQ-plane is determined;
(iii) determining a specified magnitude value (adc_data_iq) based on the proximity of the I-channel-data and Q-channel data to the origin of an IQ-plane is determined;
(iv) determining a filter coefficient (dc_coef) for a first filter (230) and a second filter (260) depending on the specified magnitude value (adc_data_iq);
(v) removing the DC-offset from the received I-channel data and Q-channel data depending on the filter coefficient (dc_coef); and
(vi) providing filtered I-channel data (filtered_data_i) and filtered Q-channel data (filtered_data_q).

11. The method according to claim 10, wherein in step (iii) a specified magnitude value (adc_data_iq) is determined based on the following formula:

$$\text{magnitude value (adc\_data\_iq)} = \text{sqrt (filtered I-channel data}^2 + \text{filtered Q-channel data}^2).$$

12. The method according to claim 10, wherein step (ii) comprises determining the value of the DC-offset and step (ii) comprises subtracting the DC- offset from I-channel data and from the Q-channel data.

13. The method according to claim 10, wherein the steps (i) to (v) are performed iteratively and clocked.

14. The method according to claim 10, wherein in step (vi) the filtered I-channel data (filtered_data_i) and the filtered Q-channel data (filtered_data_q) are provided to an ASK-demodulator (140).

Fig. 1

Fig. 2

Fig. 3a

Fig. 3b

Fig. 3c

Fig. 4

Fig. 5

Fig. 6

Fig. 7

adc_data_iq

A

B

C

D

0

high_level_set

t

Fig. 8

Fig. 9

Fig. 10

Fig. 11b

Fig. 11a

Fig. 12b

Fig. 12a

Europäisches
Patentamt

European
Patent Office

Office européen
des brevets

# EUROPEAN SEARCH REPORT

**Application Number**

EP 24 19 4944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/119418 A1 (NOEST PETER [DE] ET AL) 1 May 2014 (2014-05-01) * paragraph [0027] - paragraph [0033]; figure 3A * * figure 10 * | 1-14 | INV. H04B1/30 H04L27/36 |
| X | US 8 654 885 B2 (LEE CHAEKWAN [US]; THOMPSON PETER A [US] ET AL.) 18 February 2014 (2014-02-18) * column 3, line 63 - column 7, line 45; figures 1A-3, 6 * | 1-14 | |
| A | US 2021/376926 A1 (LE THAI SON [US]) 2 December 2021 (2021-12-02) * the whole document * | 1-14 | |

| | TECHNICAL FIELDS SEARCHED (IPC) |
|---|---|
| | H04B H04L |

The present search report has been drawn up for all claims

| Place of search | Date of completion of the search | Examiner |
|---|---|---|
| Munich | 29 January 2025 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4944

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | | | Publication date | Patent family member(s) | | Publication date |
|---|---|---|---|---|---|---|
| US 2014119418 | A1 | | 01-05-2014 | CN | 103795663 A | 14-05-2014 |
| | | | | DE | 102013016985 A1 | 30-04-2014 |
| | | | | US | 2014119418 A1 | 01-05-2014 |
| US 8654885 | B2 | | 18-02-2014 | BR | PI0712313 A2 | 17-01-2012 |
| | | | | CA | 2652695 A1 | 21-12-2007 |
| | | | | CN | 101461201 A | 17-06-2009 |
| | | | | EP | 2033392 A2 | 11-03-2009 |
| | | | | JP | 5054101 B2 | 24-10-2012 |
| | | | | JP | 5512718 B2 | 04-06-2014 |
| | | | | JP | 2009540672 A | 19-11-2009 |
| | | | | JP | 2012182793 A | 20-09-2012 |
| | | | | KR | 20090021374 A | 03-03-2009 |
| | | | | KR | 20110053493 A | 23-05-2011 |
| | | | | RU | 2008152807 A | 20-07-2010 |
| | | | | TW | 200814653 A | 16-03-2008 |
| | | | | US | 2008025381 A1 | 31-01-2008 |
| | | | | WO | 2007146090 A2 | 21-12-2007 |
| US 2021376926 | A1 | | 02-12-2021 | NONE | | |

EPO FORM P0459

For more details about this annex : see Official Journal of the European Patent Office, No. 12/82